# EUROPÄISCHE PATENTSCHRIFT

(11) **EP 2 114 964 B1**
(45) Veröffentlichungstag und Bekanntmachung des Hinweises auf die Patenterteilung: **24.07.2013**
(21) Anmeldenummer: 08708186.5
(22) Anmeldetag: 25.01.2008
(51) Int. Cl.: C07F 7/20

(54) **VERFAHREN ZUR HERSTELLUNG VON ISOCYANATOORGANOSILANEN**
PROCESS FOR PREPARING ISOCYANATOORGANOSILANES
PROCÉDÉ DE PRÉPARATION D'ISOCYANATO-ORGANOSILANES

(30) Priorität: 07.02.2007 DE 102007006147
(43) Veröffentlichungstag der Anmeldung: 11.11.2009
(73) Patentinhaber: Wacker Chemie AG, 81737 München (DE)
(72) Erfinder: BAUMANN, Frank, 84529 Tittmoning (DE); FREY, Thomas, 84489 Burghausen (DE); STANJEK, Volker, 84539 Ampfing (DE)
(74) Vertreter: Fritz, Helmut
(86) Internationale Anmeldenummer: PCT/EP2008/050847
(87) Internationale Veröffentlichungsnummer: WO 2008/095791

(56) Entgegenhaltungen:
- DE-A1- 3 544 601
- US-A- 6 008 396
- OERTEL G (EDITOR) ED - OERTEL G BECKER G W ET AL: "Polyurethane, Kunststoff-Handbuch 7" POLYURETHANE, KUNSTSTOFF HANDBUCH, MUNCHEN, CARL HANSER VERLAG, DE, Bd. BAND 7, 1984, Seiten 71-72, XP002477572

## Beschreibung

Die Erfindung betrifft ein Verfahren zur Herstellung von Silanen, die über eine Isocyanatfunktion verfügen, bei dem eine verbesserte Lagerstabilität erreicht wird.

Es besteht seit geraumer Zeit ein großes Interesse an einer wirtschaftlichen Methode zur Herstellung von Isocyanatoorganosilanen in hohen Ausbeuten und Reinheiten. Die genannten Verbindungen sind von hoher wirtschaftlicher Bedeutung.

Isocyanatosilane können beispielsweise als Haftvermittler zwischen organischen Polymeren und anorganischen Materialien verwendet werden. Vor allem aber werden Isocyanatoorganosilane industriell zur Terminierung von organischen Polyolen z.B. Polyetherpolyolen, Polyurethanen, Polyestern oder Poly-(meth-) acrylaten eingesetzt. Die resultierenden alkoxysilanterminierten Prepolymere härten bei Kontakt mit der Luftfeuchtigkeit aus und werden u.a. als Kleb- und Dichtstoffe oder auch als Lackharze bzw. als Lackharzbestandteile eingesetzt.

Im Stand der Technik werden dabei zumeist herkömmliche γ-Isocyanatopropylsilane entsprechend der Formel (1) verwendet

OCN-(CH₂)₃-Si(OR')ₓ(R")₃₋ₓ (1),

wobei R' und R" Alkylreste und x eine Zahl von 0-3, bevorzugt 3 oder 2, darstellt.

In jüngerer Zeit richtet sich jedoch ein besonderes Interesse auf die sogenannten α-Isocyanatomethylsilane der allgemeinen Formel (2)

OCN-CH₂-Si(OR')ₓ(R")₃₋ₓ (2),

wobei R' und R" und x die oben angegebenen Bedeutungen aufweisen.

Diese α-Isocyanatomethylsilane zeichnen sich durch eine besonders hohe Reaktivität gegenüber Luftfeuchtigkeit aus und sind zur Herstellung von alkoxysilanterminierten Prepolymeren mit hoher aber regulierbarer Härtungsgeschwindigkeit geeignet (beschrieben z.B. in EP 1 421 129 und WO 2004/022618). Zudem können die entsprechenden α-silanterminierten Prepolymere auch ohne die unter toxikologischen Gesichtspunkten umstrittenen Zinnkatalysatoren vernetzt werden (beschrieben u.a. in EP 1 421 129).

Es sind verschiedene Verfahren zur Herstellung von Isocyanatoorganosilanen bekannt. So wird in EP 0 212 058 ein Verfahren beschrieben, bei dem Silane mit einer Harnstoffeinheit thermisch in flüssiger Phase zu Isocyanatoorganosilanen und den entsprechenden Aminen bzw. Amiden gespalten wird

Aus EP 1 010 704 ist ein Verfahren zur Herstellung von Isocyanatoorganosilanen bekannt, bei dem Carbamatoorganosilane thermisch in flüssiger Phase unter Katalyse von Zinn-II-chlorid zu den entsprechenden Isocyanatoorganosilanen gespalten werden. In DE 101 08 543 wird die Herstellung von Isocyanatoorganosilanen aus den entsprechenden Carbamatoorganosilanen und Alkyl- oder Vinylchlorsilanen beschrieben.

Aus US 6,008,396 ist ferner ein Verfahren bekannt, bei dem Carbamatoorganosilane in inerten heißen Medien unter Abspaltung von Alkohol in die korrespondierenden Isocyanatosilane umgewandelt werden, welche dann direkt destillativ aus der Reaktionsmischung entfernt werden.

Die thermische Spaltung von Carbamatoorganosilanen zu Isocyanatoorganosilanen und Methanol wird ferner in EP 0 649 850 beschrieben, wo die Spaltung in der Gasphase unter Normal- oder reduziertem Druck stattfindet. Die Reaktion wird dabei bevorzugt in einem Röhrenreaktor durchgeführt. Eine Verbesserung dieses Verfahrens, bei dem die Carbamatspaltung in Gegenwart eines heterogenen Katalysators durchgeführt wird, ist zudem aus EP 1 343 793 bekannt. Gegebenenfalls kann die Thermolyse auch unter Verwendung der in WO 2005/056565 beschriebenen Mirkrostrukturapparaten erfolgen.

Ein weiteres Verfahren, bei dem die Isocyanatoorganosilane unter Einwirkung von Mikrowellen hergestellt werden, ist in WO 2005/056564 beschrieben. In WO 2005/055974 schließlich wird dieses Mikrowellenverfahren in Kombination mit fluidisierenden Feststoffpartikeln beschrieben.

Zumeist wurden die im Stand der Technik genannten Verfahren nur zur Herstellung der herkömmlichen γ-Isocyanatopropylsilane der Formel (1) verwendet. Sie sind jedoch - zumindest prinzipiell - auch zur Herstellung von α-Isocyanatomethylsilanen der Formel (2) geeignet. Jedoch besitzen sie ausnahmslos den Nachteil, dass die nach sämtlichen Verfahren erhaltenen α-Isocyanatomethylsilane entsprechend der Formel (2) relativ instabil sind und - zumindest bei Raumtemperatur - über keine hinreichende Lagerstabilität verfügen. So reicht bereits eine Lagerung bei Raumtemperatur von nur wenigen Wochen - je nach Herstellverfahren gegebenenfalls sogar von nur wenigen Tagen - aus, um einen Abbau von signifikanten Anteilen (d.h. >> 10 %) des jeweiligen α-Isocyanatomethylsilans zu beobachten. Bemerkenswert ist dabei insbesondere, dass der Abbau der α-Isocyanatomethylsilane auch in dichten Gefäßen unter Luftausschluß stattfindet. Hier unterscheiden sich die α-Isocyanatomethylsilane der Formel (2) signifikant von herkömmlichen Isocyanaten ohne Silaneinheit, da sich letztere gewöhnlich in luftdichten Gefäßen problemlos auch über Monate hinweg lagern lassen.

Aufgabe der Erfindung war daher die Bereitstellung eines Verfahrens zur Herstellung von Isocyanatoorganosilanen, insbesondere von α-Isocyanatomethylsilanen, mit deutlich verbesserter Lagerstabilität.

Gegenstand der Erfindung ist ein Verfahren zur Herstellung von Silanen, die über eine Isocyanatfunktion verfügen, bei dem die Silane nach ihrer chemischen Herstellung aufgereinigt und nach der Aufreinigung ausschließlich in einer Atmosphäre mit einer relativen Luftfeuchtigkeit unter 10% gehandhabt werden.

Die Handhabung der isocyanatofunktionellen Silane umfasst dabei u.a. die Lagerung sowie die Abfüllung und/oder Umfüllung in für die Lagerung und/oder Transport geeignete Behältnisse mit umfassen.

Bevorzugt wird das erfindungsgemäße Verfahren zur Herstellung von isocyanatfunktionellen Silanen der allgemeinen Formel (3)

OCN-(CH₂)ₓ-SiR¹ₐ(OR²)₃₋ₐ (3),

eingesetzt, wobei
- **R¹**: einen gegebenenfalls halogensubstituierten Alkyl-, Cycloalkyl-, Alkenyl- oder Arylrest mit 1-10 Kohlenstoffatomen,
- **R²**: einen Alkylrest mit 1-20 Kohlenstoffatomen, der durch nicht benachbarte Gruppen -O- unterbrochen sein kann,
- **x**: Werte von 1-8 und
- **a**: die Werte 0, 1, 2 oder 3 bedeuten.

Als Reste **R¹** werden Methyl-, Ethyl- oder Phenylgruppen bevorzugt. Bei den Resten **R²** handelt es sich bevorzugt um Methyl- oder Ethylgruppen. Die Variable x steht bevorzugt für 1 oder 3 wobei ein Wert von 1 - d.h. der Einsatz von **α-**Isocyanatomethylsilanen - besonders bevorzugt wird. Bei **a** handelt es sich bevorzugt um 0, 1 oder 2, besonders bevorzugt um 0 oder 1.

Die chemische Herstellung der isocyanatofunktionellen Silane kann dabei nach jedem beliebigen Verfahren erfolgen, bevorzugt erfolgt sie nach einem der im zitierten Stand der Technik beschriebenen Verfahren, wobei thermische Verfahren, wie sie in US 6,008,396, EP 0 212 058, EP 1 010 704, EP 0 649 850 oder EP 1 343 793 beschrieben sind, oder aber die in WO 2005/056564 und WO 2005/055974 beschriebenen Mikrowellenverfahren besonders bevorzugt werden.

Die Aufreinigung der isocyanatofunktionellen Silane erfolgt bevorzugt durch einen oder mehrere Destillationsschritte. Bei der Destillation wird das Silan bevorzugt über einen Dünnschichtverdampfer, eine Destillationsblase oder eine Einspeisung in eine Destillationskolonne verdampft.

Bevorzugt findet bei der Aufreinigung der isocyanatofunktionellen Silane der jeweils letzte Reinigungsschritt bereits in einer Atmosphäre mit einer relativen Luftfeuchtigkeit unter 10% statt. Besonders bevorzugt finden sämtliche Reinigungsschritte in einer Atmosphäre mit einer relativen Luftfeuchtigkeit unter 10% statt. Bei einer destillativen Aufreinigung findet der jeweils letzte Destillationsschritt bevorzugt bereits in einer Atmosphäre mit einer relativen Luftfeuchtigkeit unter 10% oder aber im Vakuum, d.h. bei einem Druck < 100 mbar, bevorzugt < 10 mbar und besonders bevorzug < 2 mbar statt. Besonders bevorzugt finden bei einer destillativen Aufreinigung sämtliche Destillationsschritte in einer Atmosphäre mit einer relativen Luftfeuchtigkeit unter 10% oder aber unter vermindertem Druck, d.h. bei einer Druck < 100 mbar, bevorzugt < 10 mbar und besonders bevorzug < 2 mbar statt.

Bevorzugt isocyanatofunktionellen Silane nach der Aufreinig ießlich in einer Atmosphäre mit einer relativen igkeit unter 5% und besonders bevorzugt ausschlie Atmosphäre mit einer relativen Luftfeuchti unter 1% gehandhabt, gelagert und/oder in für eine Lagerung der Transport geeignete Behältnisse ab- bzw. umgefüllt. Behältnisse werden vor der Befüllung vorzugsweise behandelt, um eventuell vorhandene Wasserspuren im Gefäßinneren zu entfernen. Geeignete Vorbehandlungsmethoden sind z. B, evakuieren der Behälter und anschließendes Spülen mit den oben beschriebenen Gasen oder Spülen mit Inertgas für eine definierte Zeit mit speziellen Vorrichtungen die eine optimale Verdrängung der alten Gasfüllung gewährleisten (Hebertechologie), Verdrängung des Gases durch Erwärmen des Gebindes etc.. Diese Verfahren können bei beliebigen Temperaturen und Drücken des Gases durchgeführt werden. Die verwendeten Gase werden dabei mit Verfahren nach dem Stand der Technik getrocknet und erwärmt, z. B Dampfwärmetauscher, elektrische Heizung etc..

Bei der Atmosphäre mit einer Luftfeuchtigkeit unter 10% handelt es sich bevorzugt um eine Schutzgasatmosphäre mit einem Wassergehalt von unter 1000 ppm, wobei ein Wassergehalt von unter 500 ppm und insbesondere ein Wassergehalt von unter 250 ppm besonders bevorzugt wird. Als Schutzgas werden bevorzugt getrocknete Luft, Stickstoff oder Edelgase verwendet, wobei Stickstoff oder Argon besonders bevorzugt werden.

Die Abfüllung der isocyanatofunktionellen Silane, vorzugsweise der Isocyanatosilane entsprechend der allgemeinen Formel (3), wobei für x ein Wert von 1 besonders bevorzugt wird, in für eine Lagerung und/oder Transport geeignete und gegebenenfalls vorbehandelten Behältnisse erfolgt bevorzugt in einer Glovebox, in der die jeweilige Schutzgasatmosphäre vorliegt. Bei einem industriell technischen Verfahren wird eine Abfüllung in einem hermetisch dicht abgeschlossenen Abfüllsystem, z.B. mit todraum-freien Kupplungen versehen Abfüllarmaturen, besonders bevorzugt.

Der Erfindung liegt die überraschende Tatsache zugrunde, dass die isocyanatofunktionellen Silane, insbesondere die α-Isocyanatomethylsilane entsprechend der allgemeinen Formel (3) mit x = 1 eine deutlich verbesserte Lagerstabilität aufweisen, wenn sie nach dem jeweils letzten Reinigungsschritt nie in Kontakt mit (Luft)-Feuchtigkeit gekommen sind.

Hier unterscheidet sich die Stoffgruppe der α-Isocyanatomethylsilane entsprechend der allgemeinen Formel (3) mit x = 1 von sämtlichen anderen Isocyanaten. Zwar sind auch all diese letztgenannten Verbindungen in der Lage, mit Luftfeuchtigkeit zu reagieren, weshalb auch diese nicht über längere Zeiträume hinweg an der Luft gelagert werden können. Jedoch benötigen herkömmliche Isocyanate für einen Abbau quantitative Wassermengen (je ein Wassermolekül "vernichtet" jeweils zwei Isocyanatmoleküle), und weder das Wasser selbst noch die Abbauprodukte der Reaktion von Isocyanaten mit Wasser besitzen katalytische Fähigkeiten. Daher kommt der Isocyanatabbau zum Stillstand, sobald der Kontakt mit der Luftfeuchtigkeit beendet ist.

Somit ist ein kurzer Luftkontakt, wie er z.B. bei Um- oder Abfüllvorgängen vorkommt, bei herkömmlichen Isocyanaten weitgehend unproblematisch, da ein Produktabbau dabei bestenfalls in winzigsten und in der Regel noch nicht einmal nachweisbaren Spurenmengen erfolgt. Eine Handhabung ausschließlich unter Schutzgas ist daher weder notwendig noch üblich.

Dahingegen zeigte sich bei den α-Isocyanatomethylsilanen überraschenderweise, dass diese auch in Abwesenheit von Luftfeuchtigkeit mit bemerkenswert hoher Geschwindigkeit abgebaut werden, sobald sie in ihrer "Produkthistorie" auch nur einmal mit Luftfeuchtigkeit in Kontakt gekommen sind, ohne anschließend sofort wieder aufgereinigt worden zu sein. D.h. diese Verbindungen sind - anders als alle anderen Isocyanate - auch gegen kurze Luftkontakte, wie sie bei Ab- oder Umfüllvorgängen vorkommen, äußerst empfindlich. Daher lässt sich ihre ansonsten stark eingeschränkte Lagerfähigkeit deutlich steigern, wenn sie ausschließlich unter Schutzgas bzw. wasserarmen Atmosphären gehandhabt werden.

Alle vorstehenden Symbole der vorstehenden Formeln weisen ihre Bedeutungen jeweils unabhängig voneinander auf.

### Beispiele:

In den folgenden Beispielen und Vergleichsbeispielen werden sämtliche Glasschliffe mit Schlifffett gefettet, so daß deren nahezu perfekte Luftdichtigkeit sichergestellt ist. Weiterhin sind, falls jeweils nicht anders angegeben, alle Mengen- und Prozentangaben auf das Gewicht bezogen. Sämtliche Umsetzungen wurden bei einem Druck von 0,10 MPa (abs.) und einer Temperatur von 20°C durchgeführt.

Ausgehend von α-Methylcarbamatomethyl-methyldimethoxysilan wird α-Isocyanatomethyl-methyldimethoxysilan nach dem in EP 1 343 793 beschriebenen Verfahren hergestellt. Es wird ein Rohprodukt (R) erhalten, daß einen Gehalt an α-Isocyanatomethyldimethoxymethylsilan von ca. 91% enthält.

### Beispiel 1:

Es wird eine herkömmliche Destillationsapparatur mit einem Destillationskolben mit einem Volumen von 1 1, einer Füllkörperkolonne mit einer Länge von 30 cm und einem Standardliebigkühler eingesetzt. Der Liebigkühler verfügt dabei wie üblich am Ende der Kühlerstrecke über eine Kernolive zum Anschluss einer Schlauchverbindung. Als Vorlage zur Aufnahme des Destillates dienen vier 100 ml-Kolben die über eine Spinne mit dem Liebigkühler verbunden sind und so durch Drehung der Spinne ohne Unterbrechung der Destillation nacheinander befüllt werden können. Drei der vier 100 ml-Vorlagekolben sind dabei noch mit jeweils einer Kernolive mit Hahn ausgestattet, die jedoch während des gesamten Destillationsvorganges geschlossen bleiben.

Die Apparatur wird über die Kernolive des Liebigkühlers mittels eines gasdichten Vakuumsschlauches an eine herkömmliche LaborSchutzgasanlage angeschlossen, bei der die angeschlossene Apparatur über einen Hahn wahlweise mit zwei Glassträngen verbunden werden kann. Der erste Glasstrang wird dabei mittels einer Ölpumpe evakuiert, während durch den zweiten Strang Argon bei Atmosphärendruck geleitet wird.

Zunächst wird die noch unbefüllte Destillationsapparatur über die Laborschutzgasanlage evakuiert (Druck < 1 mbar) und mittels eines Heissluftgebläses (150 °C) sorgfältig ausgeheizt. Anschließend wird die Apparatur mit Argon geflutet. Dieser Vorgang wird insgesamt dreimal wiederholt.

Anschließend wird die Vorlage im Argongegenstrom mit ca. 600 ml des Rohproduktes (R) befüllt. Die eigentliche Destillation wird bei 30 mbar, einer Sumpftemperatur von 85-90 °C und einer Kopftemperatur von ca. 82 °C durchgeführt. Zunächst wird ein Vorlauf von ca. 50 ml abdestilliert, der von dem Vorlagekolben ohne Kernolive mit Hahn aufgenommen wird. Danach werden die verbleibenden drei Vorlagekolben nacheinander mit jeweils ca. 60 ml befüllt. Anschließend wird die Destillation abgebrochen und die Destillationsapparatur mit Argon geflutet.

Danach werden die drei Vorlagenkolben mit den Hauptfraktionen über ihre Kernoliven ebenfalls mittels Vakuumschläuchen an die Laborschutzgasanlage angeschlossen. Dabei bleiben die Hähne der Kernoliven jedoch zunächst geschlossen, bis die Schlauchverbindungen jeweils dreimal über die Schutzgasanlage evakuiert und mit Argon geflutet worden waren. Erst danach werden die drei Vorlagekolben durch Öffnen der Kernolivhähne mit dem Argonstrang verbunden, im Argongegenstrom von der Destillationsapparatur gelöst und mit Glasstopfen luftdicht verschlossen. Anschließend werden auch die Hähne der Kernoliven wieder verschlossen.
Der gesamte Vorgang wird noch ein zweites Mal wiederholt, so daß insgesamt sechs frisch destillierte und luftdicht unter Argon befindliche Isocyanatosilanproben zur Verfügung stehen.

### Beispiel 2:

Es wird genauso vorgegangen wie in Beispiel 1, nur daß als Schutzgas anstelle von Argon Stickstoff verwendet wird. Auch hier wird der gesamte Destillationsvorgang zweimal wiederholt, so daß insgesamt sechs frisch destillierte und luftdicht unter Stickstoff befindliche Isocyanatosilanproben zur Verfügung stehen.

Diese sechs Proben werden anschließend in eine mit Stickstoff befüllte Glov(Feuchtigkeitsgehalt < 0,1 Gew.-%) überführt und dort jeweils einmal in einen anderen 100 ml-Kolben umgefüllt, der chließend wiederum mit einem Glasstopfen luftdicht wird.

### Vergleichsbeispiel 1:

Es wird so wie in Beispiel 1, nur daß anstelle von Schutzgas iche Raumluft (ca. 20 °C, relative Luftfeuchtigkeit ca. 50 %) zum Belüften der Destillationsapparatur verwendet wird. Zudem werden die Hauptfraktionskolben nach Beendigung der Destillation ohne besondere Vorkehrungen von der Destillationsapparatur entfernt und anschließend luftdicht verschlossen.

Auch hier wird der gesamte Destillationsvorgang zweimal wiederholt, so daß insgesamt sechs frisch destillierte und luftdicht verschlossene Isocyanatosilanproben zur Verfügung stehen.

### Vergleichsbeispiel 2:

Es wird exakt so vorgegangen wie in Vergleichsbeispiel 1. Jedoch werden die sechs frisch destillierten Proben an der Luft (ca. 20 °C, relative Luftfeuchtigkeit ca. 50 %) noch einmal in einen anderen 100 ml-Kolben umgefüllt, der anschließend wiederum luftdicht verschlossen wird.

### Beispiel 3:

Jeweils fünf der in allen Beispielen und Vergleichsbeispielen erzeugten Proben werden in ihren luftdichten Behältnissen für 3, 6, 9, 12 bzw. 15 Wochen bei ca. 20 °C gelagert. Anschließend wird ihr NCO-Gehalt bestimmt. Jeweils eine Probe aller Beispiele und Vergleichsbeispiele wird sofort nach ihrer Herstellung analysiert. Sämtliche Proben werden nach ihrer Analyse entsorgt, d.h. zu jedem der insgesamt sechs Messzeitpunkte wird eine frische Probe analysiert, die nach ihrer Herstellung noch nicht geöffnet worden war.

Die Bestimmung des NCO-Gehaltes erfolgt mittels einer nasschemischen Analyse. Dabei wird eine bekannte Menge der Probensubstanz mit einem Überschuss an Dibutylamin zum entsprechenden N-(Methyldimethoxysilylmethyl)-N',N'-dibutylharnstoff umgesetzt und das nicht verbrauchte Amin mittels Salzsäure titriert. Aus der Differenz zwischen verbrauchter HCl und eingesetztem Amin errechnet sich der Gehalt an Isocyanat-Gruppen in der Probe [theoretischer Wert für eine Reinheit von 100%: 26,1 %.]

In der folgenden Tabelle sind die aus den jeweiligen NCO-Gehalten errechneten Reinheiten der Proben aus den Beispielen und Vergleichsbeispielen nach der jeweils angegebenen Lagerdauer angegeben. Wie aus den Werten mit einer Lagerdauer von < 1 Tag ersichtlich, liegt der Wert für die frisch destillierten Proben bei allen Beispielen und Vergleichsbeispielen bei über 97 %. D.h. der kurze Kontakt mit der Luftfeuchtigkeit der Proben aus den Vergleichsbeispielen hat zu keinem signifikanten sofortigen Produktabbau geführt.

| Lagerdauer | Probe aus Bsp. 1 | Probe aus Bsp. 2 | Probe aus V.-Bsp. 1 | Probe aus V.-Bsp. 2 |
|---|---|---|---|---|
| < 1 Tag | 97,7% | 98,0% | 97,8% | 97,1% |
| 3 Wochen | 97,0% | 97,4% | 96,0% | 95,4% |
| 6 Wochen | 96,5% | 97,0% | 94,2% | 92,6% |
| 9 Wochen | 95,0% | 95,1% | 93,1% | 90,1% |
| 12 Wochen | 94,4% | 94,6% | 91,5% | 88,6% |
| 15 Wochen | 93,1% | 93,0% | 87,2% | 83,2% |

Es zeigt sich, daß die erfindungsgemäß behandelten Proben aus den Beispielen 1 und 2 eine deutlich höhere Lagerstabilität aufweisen als die Proben aus den Vergleichsbeispielen.

## Patentansprüche

1. Verfahren zur Herstellung von Silanen, die über eine Isocyanatfunktion verfügen, bei dem die Silane nach ihrer chemischen Herstellung aufgereinigt und nach der Aufreinigung ausschließlich in einer Atmosphäre mit einer relativen Luftfeuchtigkeit unter 10% gehandhabt werden.

2. Verfahren nach Anspruch 1, bei dem isocyanatfunktionelle Silane der allgemeinen Formel (3)
OCN-(CH₂)ₓ-SiR¹ₐ(OR²)₃₋ₐ (3),
hergestellt werden, wobei
**R¹** einen gegebenenfalls halogensubstituierten Alkyl-, Cycloalkyl-, Alkenyl- oder Arylrest mit 1-10 Kohlenstoffatomen,
**R²** einen Alkylrest mit 1-20 Kohlenstoffatomen, der durch nicht benachbarte Gruppen -O- unterbrochen sein kann,
**x** Werte von 1-8 und
**a** die Werte 0, 1, 2 oder 3 bedeuten.

3. Verfahren nach Anspruch 1 oder 2, bei dem x den Wert 1 bedeutet.

4. Verfahren nach Anspruch 1 bis 3, bei dem die Aufreinigung der isocyanatofunktionellen Silane durch einen oder mehrere Destillationsschritte erfolgt.

5. Verfahren nach Anspruch 1 bis 4, bei dem bei der Aufreinigung der isocyanatofunktionellen Silane der jeweils letzte Reinigungsschritt bereits in einer Atmosphäre mit einer relativen Luftfeuchtigkeit unter 10% stattfindet.

6. Verfahren nach Anspruch 1 bis 5, bei dem die Atmosphäre eine Schutzgasatmosphäre ist und das Schutzgas ausgewählt wird aus getrockneter Luft, Stickstoff oder Edelgasen.

## Claims

1. Process for preparing silanes which have an isocyanate function, wherein the silanes are purified after their chemical preparation and after purification are handled exclusively in an atmosphere having a relative atmospheric humidity of less than 10%.

2. Process according to Claim 1, wherein isocyanate-functional silanes of the general formula (3)
OCN- (CH₂)ₓ-SiR¹ₐ(OR²)₃₋ₐ (3),
where
**R¹** is an unsubstituted or halogen-substituted alkyl, cycloalkyl, alkenyl or aryl radical having from 1 to 10 carbon atoms,
**R²** is an alkyl radical which has from 1-20 carbon atoms and may be interrupted by nonadjacent -O-groups,
**x** is 1-8 and
**a** is 0, 1, 2 or 3,
are prepared.

3. Process according to Claim 1 or 2, wherein x is 1.

4. Process according to any of Claims 1 to 3, wherein the purification of the isocyanato-functional silanes is carried out by means of one or more distillation steps.

5. Process according to any of Claims 1 to 4, wherein the last purification step in the purification of the isocyanato-functional silanes takes place in an atmosphere having a relative atmospheric humidity of less than 10%.

6. Process according to any of Claims 1 to 5, wherein the atmosphere is a protective gas atmosphere and the protective gas is selected from among dried air, nitrogen and noble gases.

## Revendications

1. Procédé de fabrication de silanes disposant d'une fonction isocyanate, dans lequel les silanes sont purifiés après leur fabrication chimique et ne sont manipulés que dans une atmosphère présentant une humidité relative de l'air inférieure à 10 % après la purification.

2. Procédé selon la revendication 1, dans lequel sont fabriqués des silanes à fonction isocyanate de formule générale (3)
OCN- (CH₂)ₓ-SiR¹ₐ(OR²)₃₋ₐ (3)
dans laquelle
R¹ signifie un radical alkyle, cycloalkyle, alcényle ou aryle de 1 à 10 atomes de carbone, éventuellement à substitution halogène,
R² signifie un radical alkyle de 1 à 20 atomes de carbone, qui peut être interrompu par des groupes -O-non voisins,
x signifie des valeurs de 1 à 8, et
a signifie les valeurs 0, 1, 2 ou 3.

3. Procédé selon la revendication 1 ou 2, dans lequel x signifie la valeur 1.

4. Procédé selon les revendications 1 à 3, dans lequel la purification des silanes à fonction isocyanate a lieu par une ou plusieurs étapes de distillation.

5. Procédé selon les revendications 1 à 4, dans lequel la dernière étape de purification lors de la purification des silanes à fonction isocyanate a à chaque fois déjà lieu dans une atmosphère présentant une humidité relative de l'air inférieure à 10 %.

6. Procédé selon les revendications 1 à 5, dans lequel l'atmosphère est une atmosphère de gaz protecteur et le gaz protecteur est choisi parmi l'air séché, l'azote ou les gaz nobles.
